# EUROPÄISCHE PATENTSCHRIFT

(11) **EP 3 066 043 B1**
(45) Veröffentlichungstag und Bekanntmachung des Hinweises auf die Patenterteilung: **08.11.2017**
(21) Anmeldenummer: 14776840.2
(22) Anmeldetag: 23.09.2014
(51) Int. Cl.: B67C 7/00, B67C 3/24

(54) **VERFAHREN SOWIE BEHÄLTERBEHANDLUNGSMASCHINE ZUM BEHANDELN VON BEHÄLTERN**
METHOD AND CONTAINER-PROCESSING MACHINE FOR PROCESSING CONTAINERS
PROCÉDÉ ET MACHINE DE TRAITEMENT DE RÉCIPIENTS

(30) Priorität: 07.11.2013 DE 102013112243
(43) Veröffentlichungstag der Anmeldung: 14.09.2016
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2014/070264
(87) Internationale Veröffentlichungsnummer: WO 2015/067406

(56) Entgegenhaltungen:
- DE-B- 1 128 774
- FR-A- 1 042 566
- US-A- 2 782 897
- US-A- 4 266 653

## Beschreibung

Die Erfindung bezieht sich auf ein Verfahren gemäß Oberbegriff Patentanspruch 1 sowie auf eine Behälterbehandlungsmaschine gemäß Oberbegriff Patentanspruch 9, und wie aus der US 2,782,897 bekannt. Behälterbehandlungsmaschinen, insbesondere in Form von Füllmaschinen zum Füllen von Behältern mit einem flüssigen Füllgut, auch in ihrer Ausbildung als Rundläufer, sind in verschiedenen Ausführungen bekannt. Bei diesen bekannten Maschinen, die in der Regel für sehr hohe Leistungen (Anzahl der behandelten bzw. gefüllten Behälter je Zeiteinheit) konzipiert sind, sind am Umfang eines um eine vertikale Maschinenachse umlaufenden Rotors Füllpositionen gebildet, an die die Behälter an einem Behältereinlauf jeweils einzeln übergeben und denen die gefüllten Behälter an einem Behälterauslauf entnommen werden. Die Füllpositionen bildende Füllelemente zur gesteuerten Abgabe des Füllgutes in die Behälter sind an dem umlaufenden Rotor vorgesehen und werden mit diesem somit mitbewegt.

Bekannt sind auch Behälterbehandlungsmaschinen in ihrer Ausbildung als Füllmaschinen (DE 10 2008 018 516 A1) mit einem in einer Drehrichtung um eine vertikale Maschinenachse getaktet angetriebenen transportsternartigen Transportelement, von dem die zu füllenden Behälter, jeweils in einer Behälteraufnahme des Transportelementes aufgenommen, zwischen einem Behältereinlauf und einem Behälterauslauf bewegt und dabei an mehreren ortsfeste, d.h. mit dem Transportelement nicht mitbewegten Behandlungsstationen oder Behandlungspositionen vorbei bewegt werden, wobei die Drehbewegung des Transportelementes für die Dauer der Behandlung gestoppt wird, sobald ein Behälter eine Behandlungsposition erreicht hat.

Aufgabe der Erfindung ist es, ein Verfahren aufzuzeigen, mit dem bei reduziertem konstruktiven Aufwand und reduziertem Bauvolumen einer Behälterbehandlungsmaschine ein Behandeln von Behältern mit dennoch ausreichender Leistung und mit hoher Betriebssicherheit möglich ist. Zur Lösung dieser Aufgabe ist ein Verfahren entsprechend dem Patentanspruch 1 ausgebildet. Eine Behälterbehandlungsmaschine ist Gegenstand des Patentanspruchs 9.

Bei einer bevorzugten Ausführungsform der Erfindung dient das Verfahren zum Füllen von Behältern mit einem flüssigen Füllgut, insbesondere auch von großvolumigeren Behältern, wie beispielsweise Party-Dosen mit einem Füllvolumen von beispielsweis fünf Litern. Die Behälterbehandlungsmaschine ist in diesen Fall eine Füllmaschine.

"Behälter" sind im Sinne der Erfindung insbesondere Dosen und Flaschen, jeweils aus Metall, Glas und/oder Kunststoff, aber auch andere Packmittel, insbesondere auch solche die zum Abfüllen von pulverförmigen, granulatartigen, flüssigen oder viskosen Produkten geeignet sind.

In Dichtlage mit einem Behandlungskopf oder Füllelement befindlicher Behälter bedeutet im Sinne der Erfindung, dass der jeweilige Behälter in der dem Fachmann bekannten Weise mit seiner Behältermündung dicht an den Behandlungskopf oder an das Füllelement bzw. an eine dortige Dichtung angepresst anliegt.

Unter "Druckfüllen" ist im Sinne der Erfindung allgemein ein Füllverfahren zu verstehen, bei dem der jeweils zu füllende Behälter in Dichtlage gegen das Füllelement anliegt und in der Regel vor der eigentlichen Füllphase, d.h. vor dem Öffnen des Flüssigkeitsventils über wenigstens einen gesteuerten, im Füllelement ausgebildeten Gasweg mit einem unter Druck stehenden Spanngas (Inertgas bzw. CO2-Gas) vorgespannt wird, welches dann während des Füllens von dem dem Behälter zufließenden Füllgut zunehmend als Rückgas aus den Behälterinnenraum verdrängt wird, und zwar ebenfalls über wenigstens einen gesteuerten, im Füllelement ausgebildeten Gasweg. Dieser Vorspannphase können weitere Behandlungsphasen vorausgehen, beispielsweise ein Evakuieren und/oder ein Spülen des Behälterinnenraums mit einem Inertgas, z.B. CO2-Gas usw., und zwar ebenfalls über die im Füllelement ausgebildeten Gaswege.

Der Ausdruck "im Wesentlichen" bzw. "etwa" bzw. "ca." bedeutet im Sinne der Erfindung Abweichungen vom jeweils exakten Wert um +/- 10%, bevorzugt um +/-5% und/oder Abweichungen in Form von für die Funktion unbedeutenden Änderungen.

In Weiterbildung ist das erfindungsgemäße Verfahren beispielsweise so ausgeführt,
dass ein Transportelement in Form eines Transport- oder Transfersternes verwendet wird, der an seinem Umfang mehrere taschenartige und umfangsseitig offene Behälteraufnahmen aufweist, die bezogen auf die Maschinenachse in gleichen Winkelabständen voneinander (Teilungsabstand) vorgesehen sind,
   und/oder
dass der jeweilige, an die wenigstens eine Behandlungsposition des ersten und des zweiten Behandlungsbereichs geförderte Behälter vor oder während seiner dortigen Behandlung zur Freigabe vom Transportelement aus einer ersten Position, in der dieser Behälter mit dem Transportelement oder einer Behälteraufnahme in Eingriff steht, in eine zweite Position bewegt wird, in der sich der Behälter außerhalb des Wirkungsbereichs der Behälteraufnahmen des Transportelementes befindet, wobei diese Bewegung vorzugsweise durch Anheben des Behälters relativ zum Transportelement in einer Achse parallel oder im Wesentlichen parallel zur Maschinenachse erfolgt,
   und/oder
dass eine Behälterbehandlungsmaschine verwendet wird, bei der wenigstens ein Behandlungsbereich, vorzugsweise aber sämtliche Behandlungsbereiche wenigstens zwei, bevorzugt mehr als zwei Behandlungspositionen aufweisen, und/oder
dass die Anzahl der Behandlungspositionen an den Behandlungsbereichen gleich ist,
   und/oder
dass die Behandlung der Behälter an den Behandlungsbereichen jeweils parallel erfolgt,
   und/oder
dass das Zuführen von zu behandelnden Behältern an Behälteraufnahmen des Transportelementes durch eine Rückhalteeinrichtung gesteuert dann beendet wird, wenn eine der Anzahl der Behandlungspositionen entsprechende Anzahl an Behältern an die Behälteraufnahmen des Transportelemente übergeben wurde.
In Weiterbildung ist die erfindungsgemäße Behälterbehandlungsmaschine beispielsweise so ausgeführt,
dass die Drehrichtung des Transportelementes periodisch geändert wird und hierbei durch Drehen des Transportelementes in einer ersten Drehrichtung die zu behandelnden Behälter einem ersten Behandlungsbereich mit wenigstens einer Behandlungsposition und durch Drehen des Transportelementes in einer der ersten entgegengesetzten Drehrichtung die zu behandelnden Behälter einem zweiten Behandlungsbereich mit wenigstens einer Behandlungsposition
   zugeführt werden,
   und/oder
dass während der Behandlung der Behälter an einem der Behandlungsbereiche mit dem Transportelement das Zuführen von zu behandelnden Behältern an den anderen der Behandlungsbereiche erfolgt,
   und/oder
dass das Transportelement ein Transport- oder Transferstern ist, der an seinem Umfang mehrere taschenartige und umfangsseitig offene Behälteraufnahmen aufweist, die bezogen auf die Maschinenachse in gleichen Winkelabständen voneinander (Teilungsabstand) vorgesehen sind,
   und/oder
dass wenigstens ein Behandlungsbereich, vorzugsweise sämtliche Behandlungsbereiche wenigstens zwei, bevorzugt mehr als zwei Behandlungspositionen aufweisen,
   und/oder
dass an der wenigstens einen Behandlungsposition ein Behandlungskopf oder Füllelement vorgesehen ist,
   und/oder
dass der Abstand, den zwei in den Drehrichtungen des Transportelementes aufeinanderfolgende Behandlungspositionen oder deren Behandlungsköpfe voneinander aufweisen gleich dem Teilungsabstand der Behälteraufnahmen am Transportelement ist,
   und/oder
dass der erste Behandlungsbereich an einer Seite einer die Maschinenachse einschließenden Mittelebene und der zweite Behandlungsbereich an der anderen Seite dieser Mittelebene gebildet sind,
   und/oder
dass der Behältereinlauf und/oder der Behälterauslauf von Abschnitten eines Transportbandes, vorzugsweise von Abschnitten eines gemeinsamen unter dem Transportelement hindurchgeführten Transportbandes gebildet sind,
   und/oder
dass Mittel vorgesehen sind, mit denen die Behälter während der Behandlung an den Behandlungspositionen außer Eingriff mit dem Transportelement (3) gebracht werden,
   und/oder
dass die wenigstens eine Behandlungsposition jedes Behandlungsbereichs einen Behälterträger aufweist, der zum Anheben und Absenken des Behälters durch eine Hubeinrichtung zwischen einer unteren Position und einer oberen Position gesteuert bewegbar ist,
   und/oder
dass die Behälterträger beispielsweise für eine hängende Halterung des jeweiligen Behälters an einem Behälterhalsring oder als Standfläche für einen Behälterboden ausgebildet sind,
   und/oder
dass die wenigstens eine Behandlungsposition jedes Behandlungsbereichs eine Füllposition zum Füllen der Behälter mit einem flüssigen Füllgut ist.
Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an einem Ausführungsbeispiel näher erläutert. Es zeigen:
Fig. 1 in sehr schematischer Darstellung und in Draufsicht eine Behälterbehandlungsmaschine in Form einer Füllmaschine zum Füllen von Behältern mit einem flüssigen Füllgut;
Fig. 2 in vereinfachter Darstellung und in Seitenansicht eine der als Füllpositionen ausgebildeten Behandlungspositionen der Füllmaschine der Figur 1;
Fig. 3 eine Darstellung wie Figur 2 bei einer weiteren Ausführungsform der Erfindung.

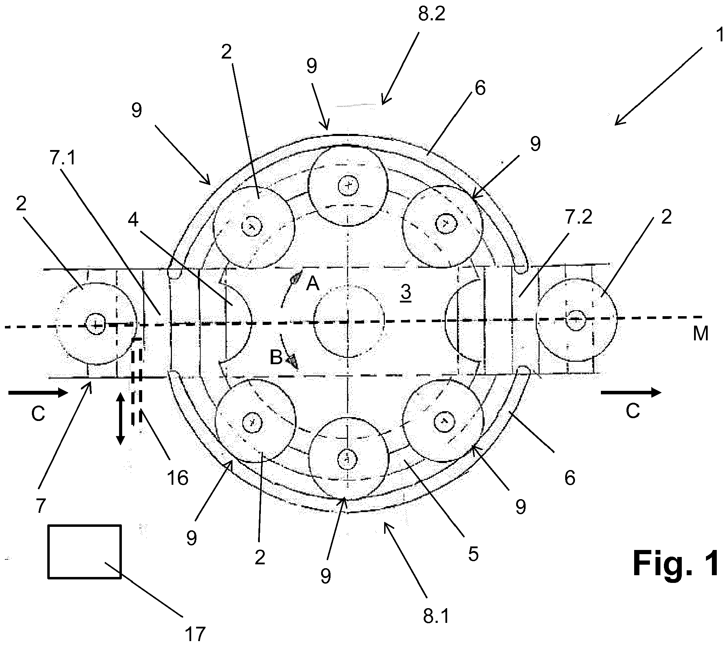

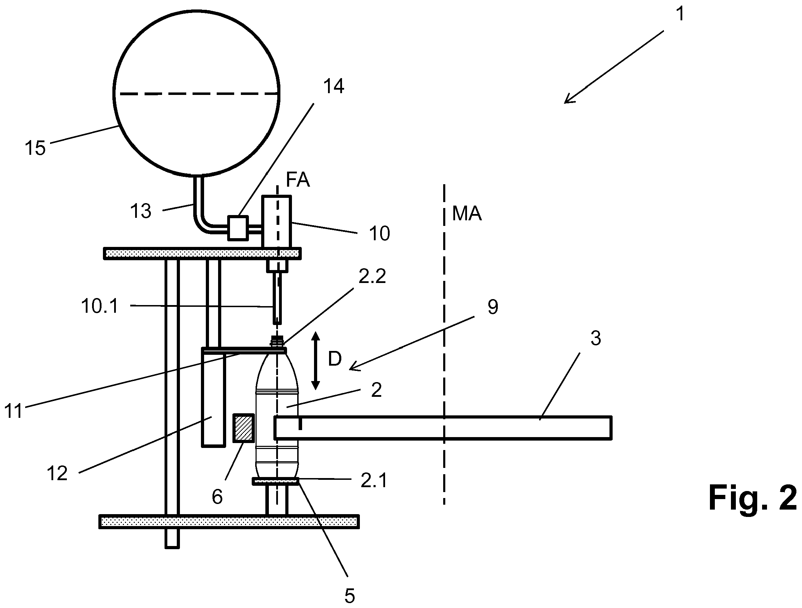

Zentrales Element der in den Figuren 1 und 2 allgemein mit 1 bezeichneten und als Füllmaschine zum Füllen von Behältern 2 in Form von Flaschen ausgebildeten Behälterbehandlungsmaschine ist ein Transferstern 3, der um eine vertikale Maschinenachse MA gesteuert drehbar ist, und zwar in Drehschritten mit sich ändernder Drehrichtung, wie dies mit den Pfeilen A und B angedeutet ist und nachstehend noch näher beschrieben wird.

Am Umfang ist der Transferstern 3 mit taschenartigen Behälteraufnahmen 4 versehen, die umfangsseitig offen und um die Maschinenachse MA in einem gleichen Winkelabstand (Teilung oder Teilungsabstand) aufeinander folgend vorgesehen sind. Bei der dargestellten Ausführungsform weist der Transferstern insgesamt acht Behälteraufnahmen 4 auf. Die Anzahl dieser Behälteraufnahmen 4 kann hiervon aber auch unterschiedlich sein.

Der Transferstern 3 ist Bestandteil eines Behältertransporteurs, der auch eine, bei der dargestellten Ausführungsform kreisringförmige und mit ihrer Achse achsgleich mit der Maschinenachse MA angeordnete Gleitleiste 5, auf der die Behälter 2 mit ihrem Behälterboden 2.1 gleitend aufstehen, sowie seitliche bogenförmige Behälterführungen 6 aufweist. Ein Transportband 7, welches unter dem Transferstern 3 hindurchgeführt ist, bildet mit einem Abschnitt einen Behältereinlauf 7.1, dem die zu behandelnden bzw. leeren Behälter 2 in der Transportrichtung C zugeführt werden, und mit einem Abschnitt einen Behälterauslauf 7.2, an dem die behandelten bzw. gefüllten Behälter 2 in der Transportrichtung C abgeführt werden.

Mit M ist eine vertikale Mittelebene bezeichnet, die die Maschinenachse MA einschließt sowie auch die Mittelebene des Transportbandes 7 oder eines entsprechenden Behältertransporteurs ist. In Abhängigkeit von der Drehrichtung sind mit dem Transferstern zwei jeweils kreisbogenförmige Behälter-Transportstrecken oder Behälter-Behandlungsstrecken zwischen dem Behältereinlauf 7.1 und dem Behälterauslauf 7.2 gebildet, und zwar bei der für die Figur 1 gewählten Darstellung eine Behälter-Behandlungsstrecke oberhalb der Mittelebene M bei der Drehrichtung A und eine Behälter-Behandlungsstrecke unterhalb der Mittelebene M bei der Drehrichtung B.

An einer Seite der Mittelebene M, d.h. an der Behälter-Behandlungsstrecke unterhalb der Mittelebene M ist am Transferstern 3 ein in der Figur 1 allgemein mit 8.1 bezeichneter Behandlungsbereich gebildet, der bei der dargestellten Ausführungsform drei als Füllpositionen ausgebildete Behandlungspositionen 9 aufweist.

Dem Behandlungsbereich 8.1 bezogen auf die Mittelebene M gegenüberliegend, d.h. an der Behälter-Behandlungsstrecke oberhalb der Mittelebene M ist am Transferstern 3 ein weiter Behandlungsbereich 8.2 gebildet, der ebenfalls die Behandlungspositionen 9 aufweist, die identisch mit den Behandlungspositionen 9 des Behandlungsbereichs 8.1 ausgebildet sind und deren Anzahl gleich der Anzahl der Behandlungspositionen 9 des Behandlungsbereichs 8.1 ist, d.h. bei der dargestellten Ausführungsform weist der Behandlungsbereich 8.2 ebenfalls drei Behandlungspositionen 9 auf.

Jede Behandlungsposition 9 umfasst u.a. einen Behandlungskopf in Form eines Füllelementes 10 mit Füllrohr 10.1, dessen Achse eine vertikale Füllelementachse FA ist, einen Behälterträger 11, der für eine hängende Halterung jeweils eines Behälters 2 an einem unterhalb seiner Behältermündung vorgesehenen Halsring 2.2 ausgebildet und mit einem Hubelement 12 in der Füllelementachse FA parallel zur Maschinenachse MA gesteuert anhebbar und absenkbar ist (Doppelpfeil D), und zwar aus einer unteren Hubposition, in der der betreffende Behälter 2 mit seinem Behälterboden auf der Gleitleiste 5 aufstehend mit einem Teil seines Umfangs in einer Behälteraufnahme 4 aufgenommen ist und die Behälteröffnung von dem unteren Ende des Füllrohres 10.1 beabstandet ist, und einer oberen Hubposition, in der das Füllrohr 10.1 durch die Behälteröffnung in den Innenraum des Behälters 2 hineinreicht und in der der Behälter 2 soweit angehoben ist, dass er sich vollständig oberhalb des Transfersternes 3 bzw. außerhalb der Behälteraufnahmen 4 befindet. Jedes Füllelement 10 ist über eine eigene Produktleitung 13 mit Durchflussmesser 14 mit einem für sämtliche Behandlungspositionen 9 gemeinsamen Füllgutkessel 15 verbunden, der während des Füllbetriebes mit dem flüssigen Füllgut teilgefüllt ist.

Die Behandlungspositionen 9 sind an jedem Behandlungsbereich 8.1 und 8.2 weiter so angeordnet, dass deren Füllelementachsen FA bezogen auf die Maschinenachse MA einen Winkelabstand voneinander aufweisen, der gleich dem Teilungsabstand der Behälteraufnahmen 4 ist und außerdem der Winkelabstand der dem Behältereinlauf 7.1 benachbarten Füllelementachse FA von der Mittelebene M sowie der Winkelabstand der dem Behälterauslauf 7.2 benachbarten Füllelementachse FA von der Mittelebene M jeweils gleich einem Teilungsabstand zweier Behälteraufnahmen 4 ist.

Mit der Behälterbehandlungsmaschine 1 erfolgt das Behandeln, d.h. das Füllen der Behälter 2 an den Behandlungsbereichen 8.1 und 8.2, und zwar an jedem Behandlungsbereich 8.1 bzw.8.2 durch Bewegen von Behältern 2 mit dem Transferstern 3 an die dortigen Behandlungspositionen 9, so dass sich an jeder Behandlungsposition 9 ein Behälter 2 befindet, durch anschließendes Außereingriffbringen der Behälter 2 vom Transferstern 3 durch Anheben in die obere Hubposition, durch Wiederineingriffbringen der Behälter 2 mit dem Transferstern 3 nach der Behandlung durch Absenken in die untere Hubposition sowie durch Ausschieben der behandelten Behälter 2 mit dem Transferstern 3 an oder über den Behälterauslauf 7.2, wobei gleichzeitig mit diesem Ausschieben neue zu behandelnde Behälter 2 an die Behandlungspositionen 9 des betreffenden Behandlungsbereichs 8.1 bzw. 8.2 gefördert werden. Diese Arbeitsweise erfolgt für die beiden Behandlungsbereichen 8.1 und 8.2 zeitlich derart versetzt oder im Gegentakt, dass während des Behandelns, d.h. Füllens der Behälter 2 an einem Behandlungsbereich 8.1 oder 8.2 dem anderen Behandlungsbereich 8.2 oder 8.1 mit dem sich drehenden Transferstern 3 neue zu behandelnde Behälter 2 zugeführt und gleichzeitig bereits behandelte Behälter 2 an oder über den Behälterauslauf 7.2 ausgeschoben werden.

Im Detail ist also folgende Arbeitsweise möglich:
In einem ersten Arbeitstakt werden bei Freigabe einer Rückhalteeinrichtung 16 und bei in einer ersten Drehrichtung, d.h. in Richtung des Pfeils B und bei der Darstellung der Figur 1 im Gegenuhrzeigersinn drehendem Transferstern 3 über den Behältereinlauf 7.1 zugeführte Behälter 2 nacheinander an jeweils eine am Behältereinlauf 7.1 vorbei bewegte Behälteraufnahme 4 übergeben und in der jeweiligen Behälteraufnahme 4 angeordnet mit dem Transferstern 3 in Richtung auf den Behandlungsbereich 8.1 mitbewegt. Mit der Rückhalteeinrichtung 16 wird das Zuführen weiterer Behälter 2 gesperrt, sobald die Anzahl der an den Transferstern 3 übergebenen Behälter 2 der Anzahl der Behandlungspositionen 9 des Behandlungsbereichs 8.1 entspricht, d.h. bei der dargestellten Ausführungsform bei drei Behältern 2. Mit dem Transferstern 3 werden die Behälter 2 weiter in Richtung des Pfeiles B soweit bewegt, dass sich jeweils ein zu behandelnder, d.h. zu füllender Behälter 2 an jeder Behandlungsposition 9 des Behandlungsbereichs 8.1 unterhalb eines dortigen Füllelementes 10 bzw. des dortigen Füllrohres 10.1 befindet. Der Transferstern 3 wird dann angehalten. Bei diesem Bewegen der zu behandelnden Behälter 2 an die Behandlungspositionen 9 des Behandlungsbereichs 8.1 werden dort bereits zuvor behandelte bzw. gefüllte und in Behälteraufnahmen 4 angeordnete Behälter 2 an den Behälterauslauf 7.2 gefördert. Weiterhin werden in diesem Arbeitstakt die angehobenen Behälter 2 an den Behandlungspositionen 9 des Behandlungsbereichs 8.2 behandelt bzw. gefüllt.

In einem zweiten Arbeitstakt erfolgt bei stehendem Transferstern 3 an den Behandlungspositionen 9 des Behandlungsbereichs 8.1 ein Anheben der Behälter 2 mittels des jeweiligen Hubelementes 12 aus der unteren Hubposition in die obere Position derart, dass jeder Behälter 2 nicht nur außer Eingriff mit dem Transferstern 3 ist, sondern sich bevorzugt auch in Dichtlage am zugehörigen Füllelement 10 befindet. Weiterhin werden in diesem Arbeitstakt die angehobenen und gefüllten Behälter 2 an den Behandlungspositionen 9 des Behandlungsbereichs 8.2 in dort bereitstehende leere Behälteraufnahmen 4 des Transfersterns 3 so abgesenkt, dass jeder dieser Behälter 2 in einer Behälteraufnahme 4 aufgenommen ist.

In einem dritten Arbeitstakt erfolgt dann am Behandlungsbereich 8.1 das Füllen der dortigen angehobenen Behälter 2 über die Füllelemente 10 sowie gleichzeitig ein Drehen des Transfersternes 3 in einer zweiten, der ersten entgegengesetzten Drehrichtung, d.h. in Richtung des Pfeiles A, wobei durch Freigabe der Rückhalteeinheit 16 an die sich dabei am Behältereinlauf 7.1 vorbei bewegenden Behälteraufnahmen 4 jeweils ein Behälter 2 übergeben wird. Das Zuführen der Behälter 2 wird durch die Rückhalteeinheit 16 wieder gesperrt, sobald die Anzahl der an den Transferstern 3 übergebenen Behälter 2 der Anzahl der Behandlungspositionen 9 des Behandlungsbereichs 8.2 entspricht. Die Drehbewegung des Transfersternes 3 wird gestoppt, sobald die mit dem Transferstern 3 mitgeführten Behälter 2 die Behandlungspositionen 9 des Behandlungsbereichs 8.2 erreicht haben und sich an jeder Behandlungsposition 9 ein zu behandelnder Behälter 2 befindet. Bei diesem Bewegen der zu behandelnden Behälter 2 an die Behandlungspositionen 9 des Behandlungsbereichs 8.2 werden dort bereits behandelte bzw. gefüllte und in Behälteraufnahmen 4 angeordnete Behälter 2 an den Behälterauslauf 7.2 gefördert.

In einem vierten Arbeitstakt erfolgt bei stehendem Transferstern 3 an den Behandlungspositionen 9 des Behandlungsbereichs 8.2 ein Anheben der Behälter 2 mittels des jeweiligen Hubelementes 12 aus der unteren Hubposition in die obere Position derart, dass jeder Behälter 2 nicht nur außer Eingriff mit dem Transferstern 3 ist, sondern sich bevorzugt auch in Dichtlage am zugehörigen Füllelement 10 befindet. An den Behandlungspositionen 9 des Behandlungsbereichs 8.1 werden die gefüllten Behälter 2 in dort bereitstehende leere Behälteraufnahmen abgesenkt, sodass jeder dieser Behälter 2 in einer Behälteraufnahme 4 aufgenommen wird.

In dem dann anschließenden ersten Arbeitstakt eines neuen Arbeitszyklus erfolgt wiederum durch Drehen des Transfersterns 3 in der der Drehrichtung A entgegengesetzten Drehrichtung B das Ausstoßen der gefüllten Behälter 2 aus dem Behandlungsbereich 8.1 an den Behälterauslauf 7.2 sowie zugleich das Bewegen der leeren Behälter an den Behandlungsbereich 8.1 derart, dass dort wiederum unter jeden Füllelement 10 ein Behälter 2 positioniert ist.

Das vorstehend beschriebene und durch eine Maschinensteuerung 17 gesteuerte Verfahren wird dann, jeweils beginnend mit dem ersten Arbeitstakt, mit dem von der Abfolge des ersten bis vierten Arbeitstaktes gebildeten Arbeitszyklus solange wiederholt, bis sämtliche Behälter 2 gefüllt bzw. der Füllprozess endgültig beendet wird.

Das Füllen der Behälter 2 erfolgt an den Behandlungspositionen 9 des jeweiligen Behandlungsbereichs 8.1 und 8.2 vorzugsweise parallel. Hierbei ist es dann auch möglich, die Steuerung verschiedener Phasen des Füllens, beispielsweise Spülen und/oder Vorspannen des Behälterinnenraumes mit Inertgas, Schnell- und Langsamfüllen sowie Beruhigung und Entlastung der gefüllten Behälter 2 nach einem Druckfüllen über gemeinsame Steuerventile zu steuern, die auf die Behandlungspositionen 9, 9a bzw. auf die dortigen Füllelemente 10 wirken.

Vorstehend wurde davon ausgegangen, dass die Behälter 2 solche sind, die unterhalb ihrer Behältermündung den Behälterflansch 2.2 aufweisen. Das beschriebene Prinzip einer Füllmaschine eignet sich aber auch für Behälter 2, die mit ihrem Behälterboden 2.1 auf einem Behälterträger aufstehend aus der unteren Hubposition, in der die Behälter 2 jeweils in einer Behälteraufnahme 4 angeordnet sind, in die obere Hubposition bewegt werden, in der die Behälter 2 aus den Behälteraufnahmen 4 herausbewegt und beispielsweise mit ihrer Behältermündung in Dichtlage an dem jeweiligen Füllelement 10 angeordnet sind.

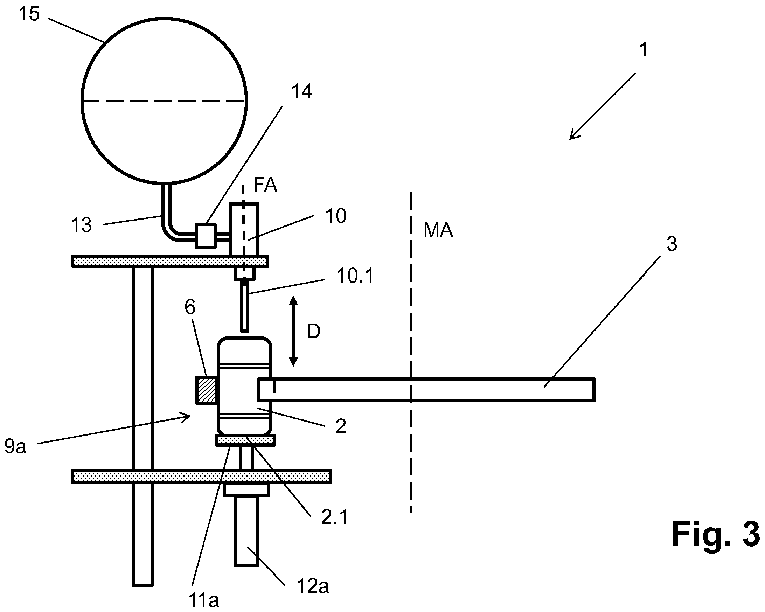

Die Figur 3 zeigt hierfür in schematischer Darstellung eine der als Füllposition ausgebildeten Behandlungspositionen 9a der Behandlungsbereiche 8.1 und 8.2, und zwar bei Ausbildung der Behälterbehandlungsmaschine 1 zum Füllen von Behältern 2 in Form von Dosen, beispielsweise Party-Dosen. Hierbei bildet die Gleitleiste 5 im Bereich der Behandlungspositionen 9a einen kreissegmentartigen Behälterträger 11a, auf dem die Behälter 2 mit ihrem Boden 2.1 aufstehen und mit dem die Behälter 2 entsprechend dem Doppelpfeil D durch eine Hubeinrichtung 12a zwischen einer unteren Hubposition, in der sich der jeweilige Behälter in einer Behälteraufnahme 4 und mit Abstand unterhalb des Füllrohres 10.1 befindet, und einer oberen Hubposition bewegbar ist, in der der Behälter 2 beispielsweise wiederum in Dichtlage am Füllelement 10 angeordnet soweit angehoben ist, dass er sich außerhalb der Behälteraufnahmen 4 befindet. Der Durchmesser des Transfersternes 3 ist bei dieser Ausführungsform dann soweit reduziert, dass die Behälter 2 zwar noch ausreichend in Behälteraufnahmen 4 aufgenommen sind, die Hubstange des Hubelementes 12a aber auch bei in der oberen Hubstellung befindlichem Behälterträger 5a nicht mit dem Transferstern 3 kollidiert. Diese in der Figur 3 dargestellte Ausführungsform eignet sich insbesondere auch zum Füllen von Behältern 2 in Form sogenannter Party-Dosen.

Wesentliche Vorteile der Behälterbehandlungsmaschine oder Füllmaschine, auch gegenüber herkömmlichen Füllmaschinen u.a. sind:
- Vereinfachter, kompakter und kostengünstiger Maschinenaufbau;
- Reduzierter Platzbedarf;
- Vereinfachter Antrieb, da lediglich ein Antriebsmotor für den Transferstern 3 erforderlich ist, während das durchgehend Transportband 7 von einem Abtransporteur angetrieben wird;
- Kurze Wechselzeit der Behälter 2 an den Behandlungspositionen 9, 9a, da das Abführen der gefüllten Behälter 2 zeitgleich mit dem Zuführen neuer leerer Behälter 2 an die Behandlungspositionen 9, 9a erfolgt;
- Schneller Wechsel zwischen verschiedenen Behältertypen;
- Sichere und einfache Positionierung der Behälter 2 unter dem jeweiligen Füllelement 10 durch den Transferstern 3
- Reduzierung von Steuerfunktionen und von Steuerelementen (Elektronikausgänge, Magnetventile, Gassteuerventil) für Gas- und/oder Spülprozesse, insbesondere für das Inertgasspülen und das Vorspannen, speziell auch dann, wenn an allen Füllelementen 10 der Füllprozess gleichzeitig startet und parallel abläuft.

Weiterhin entfällt durch die stationäre Anordnung der Behandlungspositionen 9 , 9a sowie der Füllelemente 10 die Notwendigkeit der Übertragung von Medien, Energien und Signalen zwischen dem Maschinengestell und einem Rotor bzw. an diesem Rotor ausgebildeten Behandlungspositionen und es kann auf folgende Funktionsbaugruppen üblicher Behälterbehandlungs- oder Füllmaschinen verzichtet werden:
- Hauptantrieb für einen Rotor;
- Kugeldrehverbindung zwischen Rotor und Maschinengestell;
- Medien- Drehverteiler für Füllgut und sterile gas- und oder dampfförmige Medien;
- Medien-Drehverteiler für Pneumatik zur Ansteuerung von Füllelementen und/oder Steuerventilen;
- Schleifringe und Schleifringverteiler für elektrische Energieversorgung und/oder elektrische Mess- und Steuersignale;
- Drehmomentstützen.

Mit dem Prinzip einer als Füllmaschine ausgebildeten Behälterbehandlungsmaschine 1 lassen sich in der Praxis zufriedenstellende Füllleistungen erreichen. So ist bei einer Anordnung von beispielsweise jeweils acht als Füllpositionen ausgebildeten Behandlungspositionen 9, 9a an beiden Behandlungsbereichen 8.1 und 8.2 bei der Abfüllung von Bier in Flaschen oder Dosen mit jeweils einem Füllvolumen von 0,5 Liter eine Leistung bis zu 4000 Flaschen oder Dosen je Stunde erreichbar. Der Durchmesser des Transfersternes 3 beträgt bei dieser Ausführung dann weniger als 1000 mm.

Die Erfindung wurde voranstehend an Ausführungsformen beschrieben. Es versteht sich, dass weitere Änderungen sowie Abwandlungen möglich sind. Die Erfindung wurde voranstehend an einer Behälterbehandlungsmaschine 1 in Form einer Füllmaschine erläutert. Grundsätzlich kann die Behälterbehandlungsmaschine 1 aber auch für andere Arten der Behandlung von Behältern 2 ausgeführt sein, beispielsweise zum Sterilisieren von Behältern 2. Weiterhin besteht die Möglichkeit, den Behandlungsbereich 8.2 für eine Vorbehandlung der Behälter 2 zu nutzen, wobei die an dem Behandlungsbereich vorbehandelten Behälter dann durch Drehen des Transfersterns 3 in der ersten Drehrichtung (Drehrichtung B) dann an die Behandlungspositionen 9 des Behandlungsbereichs 8.1 bewegt werden.

Die Erfindung wurde voranstehend an einer Behälterbehandlungsmaschine 1 in Form einer Füllmaschine erläutert, bei der sich die Behälter 2 während des Füllens in Dichtlage an dem Füllventil befinden, dieses ist jedoch nicht zwingend. Grundsätzlich kann die Behälterbehandlungsmaschine 1 auch für eine Freistrahlfüllung ausgebildet sein. Wobei sich der Behälter dann während des Füllprozesses nicht in Dichtlage an dem Füllventil befindet, sondern auf Abstand zu diesem angeordnet ist, so dass Füllventil und Behälter nicht in Kontakt zu einander kommen.

Die Erfindung wurde voranstehend an einer Behälterbehandlungsmaschine 1 mit einem Transportelement in Form eines Transport- oder Transfersternes(3) mit taschenartigen und umfangsseitig offenen Behälteraufnahmen (4) erläutert. Grundsätzlich kann die Behälterbehandlungsmaschine 1 aber auch mit einem solchen Transportelement ausgeführt sein, dass anstatt der taschenartigen und umfangsseitigen offenen Behälteraufnahmen (4) umfangsseitig angeordnete Greifer oder Greifelemente aufweist. Diese Greifer oder Greifelemente sind dazu vorgesehen, die zu behandelnden Behälter zu erfassen und zu führen, und an den dafür vorgesehenen Stellen wieder freizugeben.

### Bezugszeichenliste

- 1: Behälterbehandlungsmaschine
- 2: Behälter
- 2.1: Behälterboden
- 2.2: Behälterflansch
- 3: Transferstern
- 4: Behälteraufnahme
- 5: Gleitleiste
- 6: Behälterführung
- 7: Transportband
- 7.1: Behältereinlauf
- 7.2: Behälterauslauf
- 8.1, 8.2: Behandlungsbereich
- 9, 9a: Behandlungsposition
- 10: Behandlungskopf oder Füllelement
- 10.1: Füllrohr
- 11, 11a: Behälterträger
- 12, 12a: Hubelement
- 13: Produktleitung
- 14: Durchflussmesser
- 15: Füllgutkessel
- 16: Rückhalteeinheit
- 17: Maschinensteuerung
- A, B: Drehrichtung des Transfersternes 3
- C: Transportrichtung des Transportbandes
- FA: Füllelementachse
- MA: Maschinenachse
- M: Mittelebene

## Patentansprüche

1. Verfahren zum Behandeln von Behältern (2), beispielsweise zum Füllen von Behältern (2) mit einem Füllgut, wobei die zu behandelnden Behälter (2) mit einem Transportelement (3), welches um eine Maschinenachse (MA) drehbar angetrieben ist und Behälteraufnahmen (4) aufweist, von einem Behältereinlauf (7.1) an mit dem Transportelement (3) nicht mit
bewegte Behandlungspositionen (9, 9a) und nach erfolgter Behandlung an einen Behälterauslauf (7.2) gefördert werden,
**dadurch gekennzeichnet,**
**dass** die Drehrichtung des Transportelementes periodisch derart geändert wird, dass durch Drehen des Transportelementes (3) in einer ersten Drehrichtung (B) die zu behandelnden Behälter (2) einem ersten Behandlungsbereich (8.1) mit wenigstens einer Behandlungsposition (9, 9a) und durch Drehen des Transportelementes (3) in einer der ersten entgegengesetzten Drehrichtung (A) die zu behandelnden Behälter (2) einem zweiten Behandlungsbereich (8.2) mit wenigstens einer Behandlungsposition (9, 9a) zugeführt werden, und dass während der Behandlung der Behälter (2) an einem der Behandlungsbereiche (8.1, 8.2) mit dem Transportelement (3) das Zuführen von zu behandelnden Behältern (2) an den anderen der Behandlungsbereiche (8.1, 8.2) erfolgt.

2. Verfahren nach Anspruch 1, **dadurch gekennzeichnet, dass** die Behälter (2) während der Behandlung außer Eingriff mit dem Transportelement (3) stehen.

3. Verfahren nach Anspruch 1 oder 2, **dadurch gekennzeichnet, dass** beim Zuführen von zu behandelnden Behältern (2) an einen Behandlungsbereich (8.1, 8.2) an diesem bereits behandelte Behälter (2) an den Behälterauslauf (7.2) gefördert werden.

4. Verfahren nach einem der vorhergehenden Ansprüche, **gekennzeichnet durch** die Verwendung eines Transportelementes in Form eines Transport- oder Transfersternes (3), der an seinem Umfang mehrere taschenartige und umfangsseitig offene Behälteraufnahmen (4) aufweist, die bezogen auf die Maschinenachse (MA) in gleichen Winkelabständen voneinander (Teilungsabstand) vorgesehen sind, oder durch die Verwendung eines Transportelementes in Form eines Transport- oder Transfersternes (3), der an seinem Umfang mehrere Greifer oder Greiferelemente aufweist, die bezogen auf die Maschinenachse (MA) in gleichen Winkelabständen voneinander (Teilungsabstand) vorgesehen sind.

5. Verfahren nach einem der Ansprüche 2 - 4, **dadurch gekennzeichnet, dass** der jeweilige, an die wenigstens eine Behandlungsposition (9, 9a) geförderte Behälter (2) vor oder während seiner dortigen Behandlung zur Freigabe vom Transportelement (3) aus einer ersten Position, in der dieser Behälter (2) mit dem Transportelement (3) oder einer Behälteraufnahme (4) in Eingriff steht, in eine zweite Position bewegt wird, in der sich der Behälter (2) außerhalb des Wirkungsbereichs des Transportelementes (3) befindet, wobei diese Bewegung vorzugsweise durch Anheben des Behälters (2) relativ zum Transportelement (3) in einer Achse (FA) parallel oder im Wesentlichen parallel zur Maschinenachse (MA) erfolgt.

6. Verfahren nach einem der vorhergehenden Ansprüche, **gekennzeichnet durch** die Verwendung einer Behälterbehandlungsmaschine (1), bei der die Behandlungsbereiche (8.1, 8.2) jeweils wenigstens eine, vorzugsweise mehr als eine Behandlungsposition (9, 9a) aufweisen, wobei beispielsweise die Behandlung der Behälter (2) an den Behandlungspositionen jedes Behandlungsbereichs (8.1, 8.2) jeweils parallel erfolgt.

7. Verfahren nach einem der vorhergehenden Ansprüche, **dadurch gekennzeichnet, dass** ein Zuführen von zu behandelnden Behältern (2) von dem Behältereinlauf (7.1) an die Behälteraufnahmen (4) des Transportelementes (3) dann durch eine Rückhalteeinrichtung (16) gesteuert beendet wird, wenn eine der Anzahl der Behandlungspositionen (9) entsprechende Behälter-Anzahl an die Behälteraufnahmen (4) des Transportelemente (3) übergeben wurde.

8. Verfahren nach einem der vorhergehenden Ansprüche, **dadurch gekennzeichnet, dass** an einem Behandlungsbereich (8.2) Vorbehandlung der Behälter (2) und am anderen Behandlungsbereich eine Weiterbehandlung der vorbehandelten Behälter (2) erfolgt.

9. Behälterbehandlungsmaschine zum Behandeln von Behältern (2), beispielsweise zum Füllen von Behältern (2) mit einem Füllgut, mit einem Behälteraufnahmen (4) aufweisenden Transportelement (3), welches um eine Maschinenachse (MA) drehbar angetrieben ist und mit welchem die über einen Behältereinlauf (7.1) zugeführten zu behandelnden Behälter (2) an mit dem Transportelement (3) nicht mit bewegte Behandlungspositionen (9, 9a) und nach einer dortigen Behandlung an einen Behälterauslauf (7.2) gefördert werden,
**dadurch gekennzeichnet,**
**dass** die Drehrichtung (A, B) des Transportelementes (3) umkehrbar ist, so dass jeweils zwischen dem Behältereinlauf (7.1) und dem Behälterauslauf (7.2) eine erste Behälter-Behandlungsstecke, auf der die Behälter (2) mit dem in einer ersten Drehrichtung (B) drehenden Transportelement (3) bewegt werden, und eine zweite Behälter-Behandlungsstecke gebildet sind, auf der die Behälter (2) mit dem in einer zweiten, der ersten entgegengesetzten Drehrichtung (B) drehenden Transportelement (3) bewegt werden, und dass an beiden beidseitig von der Maschinenachse (MA) angeordneten Behälter-Behandlungsstecken jeweils ein Behandlungsbereich (8.1, 8.2) mit wenigstens einer Behandlungsposition (9, 9a) vorgesehen ist.

10. Behälterbehandlungsmaschine nach Anspruch 9, **gekennzeichnet durch** eine Maschinensteuerung (17) zur Steuerung der Behälterbehandlungsmaschine (1) in der Weise,
dass die Drehrichtung des Transportelementes periodisch geändert wird und hierbei durch Drehen des Transportelementes (3) in einer ersten Drehrichtung (B) die zu behandelnden Behälter (2) einem ersten Behandlungsbereich (8.1) mit wenigstens einer Behandlungsposition (9, 9a) und durch Drehen des Transportelementes (3) in einer der ersten entgegengesetzten Drehrichtung (A) die zu behandelnden Behälter (2) einem zweiten Behandlungsbereich (8.2) mit wenigstens einer Behandlungsposition (9, 9a) zugeführt werden, und dass während der Behandlung der Behälter (2) an einem der Behandlungsbereiche (8.1, 8.2) mit dem Transportelement (3) das Zuführen von zu behandelnden Behältern (2) an den anderen der Behandlungsbereiche (8.1, 8.2) erfolgt.

11. Behälterbehandlungsmaschine nach Anspruch 9 oder 10, **gekennzeichnet durch** Mittel (12, 12a), mit denen die Behälter (2) während der Behandlung an den Behandlungspositionen (9, 9a) außer Eingriff mit dem Transportelement (3) gebracht werden.

12. Behälterbehandlungsmaschine nach Anspruch 11, **dadurch gekennzeichnet, dass** die wenigstens eine Behandlungsposition (9, 9a) einen Behälterträger (11, 11a) aufweist, der zum Anheben und Absenken des Behälters (2) durch eine um eine Hubeinrichtung (12, 12a) zwischen einer unteren Position und einer oberen Position gesteuert bewegbar ist, wobei der Behälterträger (11, 11a) für eine hängende Halterung des jeweiligen Behälters (2) an einem Behälterhalsring (22) oder als Standfläche für einen Behälterboden (2.1) ausgebildet ist.

13. Behälterbehandlungsmaschine nach einem der vorhergehenden Ansprüche, **dadurch gekennzeichnet, dass** das Transportelement ein Transport- oder Transferstern (3) ist, der an seinem Umfang mehrere taschenartige und umfangsseitig offene Behälteraufnahmen (4) aufweist, die bezogen auf die Maschinenachse (MA) in gleichen Winkelabständen voneinander (Teilungsabstand) vorgesehen sind.

14. Behälterbehandlungsmaschine nach einem der vorhergehenden Ansprüche, **dadurch gekennzeichnet, dass** wenigstens einer der Behandlungsbereiche (8.1, 8.2), vorzugsweise sämtliche Behandlungsbereiche (8.1, 8.2) wenigstens zwei, bevorzugt mehr als zwei Behandlungspositionen (9, 9a) aufweisen, wobei die Anzahl der Behandlungspositionen (9) beider Behandlungsbereiche (8.1, 8.2) vorzugsweise gleich ist.

15. Behälterbehandlungsmaschine nach Anspruch 12, **dadurch gekennzeichnet, dass** der Abstand, den zwei in den Drehrichtungen (A, B) des Transportelementes (3) aufeinander folgende Behandlungspositionen (9, 9a) oder deren Behandlungsköpfe (10) voneinander aufweisen gleich dem Teilungsabstand der Behälteraufnahmen (4) am Transportelement (3) ist.

16. Behälterbehandlungsmaschine nach einem der vorhergehenden Ansprüche, **dadurch gekennzeichnet, dass** der Behältereinlauf (7.1) und der Behälterauslauf (7.2) von Abschnitten eines Transportbandes, vorzugsweise von Abschnitten eines gemeinsamen unter dem Transportelement (3) hindurchgeführten Transportbandes (7) gebildet sind, wobei vorzugsweise eine Mittelebene (M) der Transportbänder oder des gemeinsamen unter dem Transportelement (3) hindurchgeführten Transportbandes (7) die Maschinenachse (MA) einschließt.

17. Behälterbehandlungsmaschine nach einem der vorhergehenden Ansprüche, **dadurch gekennzeichnet, dass** die wenigstens eine Behandlungsposition der Behandlungsbereiche (8.1, 8.2) eine Füllposition (9, 9a) zum Füllen der Behälter (2) mit einem flüssigen Füllgut ist.

## Claims

1. Method for processing containers (2), for example for filling containers (2) with a filling product, wherein the containers (2) to be treated are conveyed by a transport element (3) which is rotatably driven about a machine axis (MA) and which comprises container receivers (4), from a container inlet (7.1) to processing positions (9, 9a), which are not moved with the transport element (3), and, after processing has been completed, are conveyed to a container outlet (7.2),
**characterised in that**
the direction of rotation of the transport element is periodically changed in such a way that, by rotating the transport element (3) in a first direction of rotation (B), the containers (2) to be treated are conveyed to a first processing region (8.1) with at least one processing position (9, 9a), and, by rotating the transport element (3) in a direction of rotation (A) opposed to the first direction, the containers (2) to be treated are delivered to a second processing region (8.2) with at least one processing position (9, 9a), and that, during the processing of the containers (2) at one of the processing regions (8.1, 8.2), the containers (2) to be treated are delivered by the transport element (3) to the other of the processing regions (8.1, 8.2).

2. Method according to claim 1, **characterised in that** the containers (2) are out of engagement with the transport element (3).

3. Method according to claim 1 or 2, **characterised in that**, at the delivery of containers (2) to be treated to a processing region (8.1, 8.2), containers (2) which have already been treated there are conveyed to the container outlet (7.2).

4. Method according to any one of the preceding claims, **characterised by** the use of a transport element in the form of a transport star or transfer star (3), which comprises at its circumference a plurality of pocket-type container receivers (4), open on the circumference side, which are provided at equal angular distances (division interval spacing) from one another in relation to the machine axis (MA), or by the use of a transport element in the form of a transport star or transfer star (3), comprising at its circumference a plurality of grippers or gripper elements, which are provided at equal angular distances (division interval spacing) from one another in relation to the machine axis (MA).

5. Method according to any one of the claims 2 to 4, **characterised in that** the respective container (2), conveyed to the at least one processing position (9, 9a), is moved before or during its processing there, in order to release the transport element (3), out of a first position, in which this container (2) is in engagement with the transport element (3) or with a container receiver (4), into a second position, in which the container (2) is located outside the effect region of the transport element (2), wherein this movement takes place preferably by the raising of the container (2) relative to the transport element (3) in an axis (FA) parallel or essentially parallel to the machine axis (MA).

6. Method according to any one of the preceding claims, **characterised by** the use of a container processing machine (1), with which the processing regions (8.1, 8.2) comprise in each case one processing position (9, 9a), and preferably more than one, wherein, for example, the processing of the containers (2) takes place at the processing positions of each processing region (8.1, 8.2) in each case in parallel.

7. Method according to any one of the preceding claims, **characterised in that** the feed of containers (2) which are to be treated from the container inlet (7.1) to the container receivers (4) of the transport element (3) is then ended in a controlled manner by a retention device (16) when a number of containers corresponding to the number of processing positions (9) have been transferred to the container receivers (4) of the transport elements (3).

8. Method according to any one of the preceding claims, **characterised in that** at a processing region (8.2) a preliminary processing of the containers (2) takes place, and at another processing region a further processing of the preliminary processed containers (2).

9. Container processing machine for the processing of containers (2), for example for the filling of containers (2) with a filling product, with a transport element (3) comprising container receivers (4), which can be rotatably driven about a machine axis (MA) and with which the containers (2) to be treated, delivered via a container inlet (7.1), are conveyed to processing positions (9, 9a), not moved with the transport element (3), and, after processing there, are conveyed to a container outlet (7.2),
**characterised in that**
the direction of rotation (A, B) of the transport element (3) is reversible, such that in each case, between the container inlet (7.1) and the container outlet (7.2), a first container processing segment is formed, on which the containers (2) are moved by the transport element (3) rotating in a first direction of rotation (B), and a second container processing segment is formed, on which the containers (2) are moved by a transport element (3) rotating in a second direction of rotation (B) opposed to the first direction of rotation, and that, on both of the container processing segments arranged on both sides of the machine axis (MA), in each case a processing region (8.1, 8.2) with at least one processing position (9, 9a) is provided.

10. Container processing machine according to claim 9, **characterised by** a machine control unit (17) for controlling the container processing machine (1) in such a way that the direction of rotation of the transport element is changed periodically, and thereby, by the rotation of the transport element (3) in a first direction of rotation (B), the containers (2) to be processed are delivered to a first processing region (8.1) with at least one processing position (9, 9a), and, by the rotation of the transport element (3) in a direction of rotation (A) opposed to the first direction, the containers (2) to be treated are delivered to a second processing region (8.2) with at least one processing position (9, 9a), and that, during the processing of the containers (2) at one of the processing regions (8.1, 8.2), the containers (2) to be treated are delivered by the transport element (3) to the other of the processing regions (8.1, 8.2).

11. Container processing machine according to claim 9 or 10, **characterised by** means (12, 12a), with which the containers (2), during the processing at the processing positions (9, 9a), are brought out of engagement with the transport element (3).

12. Container processing machine according to claim 11, **characterised in that** the at least one processing position (9, 9a) comprises a container carrier (11, 11a), which for the raising and lowering of the container (2) can be moved in a controlled manner by means of a lifting device (12, 12a) between a lower position and an upper position, wherein the container carrier (11, 11a) is configured for a suspended holding of the respective container (2) at a container neck ring (22), or as a standing surface for a container base (2.1).

13. Container processing machine according to any one of the preceding claims, **characterised in that** the transport element is a transport star or transfer star (3), which comprises at its circumference a plurality of pocket-type container receivers (4), open on the circumference side, which are provided at equal angular distances (division interval spacing) from one another in relation to the machine axis (MA).

14. Container processing machine according to any one of the preceding claims, **characterised in that** at least one of the processing regions (8.1, 8.2), preferably all of the processing regions (8.1, 8.2), comprise(s) at least two, preferably more than two, processing positions (9, 9a), wherein the number of the processing positions (9) of both processing regions (8.1, 8.2) is preferably equal.

15. Container processing machine according to claim 12, **characterised in that** the distance interval of the two processing positions (9, 9a) or their treatment heads (10) following one another in the directions of rotation (A, B) of the transport element (3) is equal to the division interval spacing of the container receivers (4) at the transport element (3).

16. Container processing machine according to any one of the preceding claims, **characterised in that** the container inlet (7.1) and the container outlet (7.2) are formed from sections of a transport band, preferably from sections of a transport band (7) guided jointly beneath the transport element (3), wherein preferably a middle plane (M) of the transport bands or of the transport band (7) guided jointly beneath the transport element (3) encloses the machine axis (MA).

17. Container processing machine according to any one of the preceding claims, **characterised in that** the at least one processing position of the processing regions (8.1, 8.2) is a filling position (9, 9a) for the filling of the containers (2) with a liquid filling product.

## Revendications

1. Procédé servant à traiter des contenants (2), par exemple servant à remplir des contenants (2) avec un produit de remplissage, dans lequel les contenants (2) à traiter sont convoyés à l'aide d'un élément de transport (3), qui est entraîné de manière à pouvoir tourner autour d'un axe de machine (MA) et qui présente des logements de contenant (4), depuis une arrivée de contenants (7.1) au niveau de postes de traitement (9, 9a) non déplacés avec l'élément de transport (3) et, une fois le traitement effectué, au niveau d'une sortie de contenants (7.2),
**caractérisé en ce**
**que** la direction de rotation de l'élément de transport est modifiée périodiquement de telle manière que la rotation de l'élément de transport (3) dans une première direction de rotation (B) permet d'amener les contenants (2) à traiter à une première zone de traitement (8.1) comprenant au moins un poste de traitement (9, 9a) et la rotation de l'élément de transport (3) dans une direction de rotation (A) opposée à la première direction de rotation permet d'amener les contenants (2) à traiter à une deuxième zone de traitement (8.2) comprenant au moins un poste de traitement (9, 9a), et que l'amenée de contenants (2) à traiter à l'autre des zones de traitement (8.1, 8.2) est effectuée, au cours du traitement des contenants (2) au niveau d'une des zones de traitement (8.1, 8.2), à l'aide de l'élément de transport (3).

2. Procédé selon la revendication 1, **caractérisé en ce que** les contenants (2) ne sont pas en prise avec l'élément de transport (3) au cours du traitement.

3. Procédé selon la revendication 1 ou 2, **caractérisé en ce que** lors de l'amenée de contenants (2) à traiter à une zone de traitement (8.1, 8.2), des contenants (2) déjà traités au niveau de cette dernière sont convoyés à la sortie de contenants (7.2).

4. Procédé selon l'une quelconque des revendications précédentes, **caractérisé par** l'utilisation d'un élément de transport se présentant sous la forme d'une étoile de transport ou d'une étoile de transfert (3), qui présente, au niveau de sa périphérie, plusieurs logements de contenant (4) de type compartiments et ouverts côté périphérie, lesquels sont prévus à des distances angulaires identiques les uns des autres (écart d'espacement) par rapport à l'axe de machine (MA), ou par l'utilisation d'un élément de transport se présentant sous la forme d'une étoile de transport ou de transfert (3), qui présente, au niveau de sa périphérie, plusieurs systèmes de préhension ou éléments de préhension, qui sont prévus à des distances angulaires identiques (écart d'espacement) les uns des autres par rapport à l'axe de machine (MA).

5. Procédé selon l'une quelconque des revendications 2 - 4, **caractérisé en ce que** le contenant (2) respectif convoyé à l'au moins un poste de traitement (9, 9a) est déplacé, avant ou au cours de son traitement effectué à cet endroit, aux fins de la libération de l'élément de transport (3), d'une première position, dans laquelle ledit contenant (2) est en prise avec l'élément de transport (3) ou un logement de transport (4), dans une deuxième position, dans laquelle le contenant (2) se trouve à l'extérieur de la zone d'action de l'élément de transport (3), dans lequel ledit déplacement est effectué de préférence en soulevant le contenant (2) par rapport à l'élément de transport (3) dans un axe (FA) de manière parallèle ou sensiblement parallèle à l'axe de machine (MA).

6. Procédé selon l'une quelconque des revendications précédentes, **caractérisé par** l'utilisation d'une machine de traitement de contenants (1), dans laquelle les zones de traitement (8.1, 8.2) présentent respectivement au moins un, de préférence plus d'un poste de traitement (9, 9a), dans lequel par exemple le traitement des contenants (2) au niveau des postes de traitement de chaque zone de traitement (8.1, 8.2) est effectué respectivement en parallèle.

7. Procédé selon l'une quelconque des revendications précédentes, **caractérisé en ce qu'**une amenée de contenants (2) à traiter depuis l'arrivée de contenant (7.1) aux logements de contenant (4) de l'élément de transport (3) se termine alors de manière commandée par un dispositif de retenue (16) quand un nombre de contenants correspondant au nombre des postes de traitement (9) a été transféré aux logements de contenant (4) de l'élément de transport (3).

8. Procédé selon l'une quelconque des revendications précédentes, **caractérisé en ce qu'**un prétraitement des contenants (2) est effectué au niveau d'une zone de traitement (8.2) et une poursuite du traitement des contenants (2) prétraités est effectuée au niveau de l'autre zone de traitement.

9. Machine de traitement de contenants servant à traiter des contenants (2), par exemple servant à remplir des contenants (2) avec un produit de remplissage, comprenant un élément de transport (3) présentant des logements de contenant (4), lequel est entraîné de manière à pouvoir tourner autour d'un axe de machine (MA) et à l'aide duquel les contenants (2) à traiter amenés par l'intermédiaire d'une arrivée de contenants (7.1) sont convoyés à des postes de traitement (9, 9a) non déplacés avec l'élément de transport (3) et sont convoyés, après un traitement effectué à cet endroit, à une sortie de contenants (7.2),
**caractérisée en ce**
**que** la direction de rotation (A, B) de l'élément de transport (3) peut être inversée de sorte qu'une première ligne de traitement de contenants, sur laquelle les contenants (2) sont déplacés à l'aide de l'élément de transport (3) tournant dans une première direction de rotation (B), et une seconde ligne de traitement de contenants, sur laquelle les contenants (2) sont déplacés à l'aide de l'élément de transport (3) tournant dans une seconde direction de rotation (B) opposée à la première direction de rotation, sont formées respectivement entre l'arrivée de contenants (7.1) et la sortie de contenants (7.2), et que respectivement une zone de traitement (8.1, 8.2) comprenant au moins un poste de traitement (9, 9a) est prévue au niveau des deux lignes de traitement de contenants disposées de part et d'autre de l'axe de machine (MA).

10. Machine de traitement de contenants selon la revendication 9, **caractérisée par** une commande de machine (17) servant à commander la machine de traitement de contenants (1) de telle manière
que la direction de rotation de l'élément de transport est modifiée périodiquement et dans le cas présent la rotation de l'élément de transport (3) dans une première direction de rotation (B) permet d'amener les contenants (2) à traiter à une première zone de traitement (8.1) comprenant au moins un poste de traitement (9, 9a) et la rotation de l'élément de transport (3) dans une direction de rotation (A) opposée à la première direction de rotation permet d'amener les contenants (2) à traiter à une deuxième zone de traitement (8.2) comprenant au moins un poste de traitement (9, 9a), et que l'amenée de contenants (2) à traiter à l'autre des zones de traitement (8.1, 8.2) est effectuée, au cours du traitement des contenants (2) au niveau d'une des zones de traitement (8.1, 8.2), à l'aide de l'élément de transport (3).

11. Machine de traitement de contenants selon la revendication 9 ou 10, **caractérisée par** des moyens (12, 12a), à l'aide desquels les contenants (2) sont amenés hors de la prise avec l'élément de transport (3) au cours du traitement au niveau des postes de traitement (9, 9a).

12. Machine de traitement de contenants selon la revendication 11, **caractérisée en ce que** l'au moins un poste de traitement (9, 9a) présente un support de contenant (11, 11a), qui peut être déplacé de manière commandée par un dispositif de levage (12, 12a) entre une position inférieure et une position supérieure afin de soulever et d'abaisser le contenant (2), dans laquelle le support de contenant (11, 11a) est réalisé en vue d'une fixation en suspension du contenant (2) respectif au niveau d'une bague de goulot de récipient (22) ou sous la forme d'une surface de pose pour un fond de contenant (2.1).

13. Machine de traitement de contenants selon l'une quelconque des revendications précédentes, **caractérisée en ce que** l'élément de transport est une étoile de transport ou de transfert (3), qui présente, au niveau de sa périphérie, des logements de contenant (4) de type compartiment ou ouverts côté périphérie, qui sont prévus à des distances angulaires identiques les uns des autres (écart d'espacement) par rapport à l'axe de machine (MA).

14. Machine de traitement de contenants selon l'une quelconque des revendications précédentes, **caractérisée en ce qu'**au moins une des zones de traitement (8.1, 8.2), de préférence toutes les zones de traitement (8.1, 8.2) présentent au moins deux, de préférence plus de deux postes de traitement (9, 9a), dans laquelle le nombre des postes de traitement (9) des deux zones de traitement (8.1, 8.2) est de préférence identique.

15. Machine de traitement de contenants selon la revendication 12, **caractérisée en ce que** la distance que deux postes de traitement (9, 9a) se suivant l'un l'autre dans les directions de rotation (A, B) de l'élément de transport (3) ou leurs têtes de traitement (10) présentent les uns par rapport aux autres, est identique à l'écart d'espacement entre les logements de contenant (4) au niveau de l'élément de transport (3).

16. Machine de traitement de contenants selon l'une quelconque des revendications précédentes, **caractérisée en ce que** l'arrivée de contenants (7.1) et la sortie de contenants (7.2) sont formées par des sections d'une bande de transport, de préférence par des sections d'une bande de transport (7) commune guidée sous l'élément de transport (3), dans laquelle de préférence un plan central (M) des bandes de transport ou de la bande de transport (7) commune guidée sous l'élément de transport (3) renferme l'axe de machine (MA).

17. Machine de traitement de contenants selon l'une quelconque des revendications précédentes, **caractérisée en ce que** l'au moins un poste de traitement des zones de traitement (8.1, 8.2) est un poste de remplissage (9, 9a) servant à remplir les contenants (2) avec un produit de remplissage liquide.
